# EUROPÄISCHE PATENTANMELDUNG

(11) **EP 2 186 780 A1**
(43) Veröffentlichungstag der Anmeldung: **19.05.2010**
(21) Anmeldenummer: 07015570.0
(22) Anmeldetag: 08.08.2007
(51) Int. Cl.: C02F 1/48, A61L 2/02

(54) **Vorrichtung und Verfahren zur Reduktion von Bakterien und Viren im Wasser mittels eines kontrolliert wirkenden elektrischen Feldes**

(30) Priorität: 12.07.2007 DE 102007032916
(71) Anmelder: H2O Concepts International Inc., Phoenix AZ 85027 (US); MPULSE Engineering SA de C.V., C.P. 85506 (MX); Bohle, Harald, 06116 Halle/Saale (DE)
(72) Erfinder: Peak, Robert R., Phoenix, AZ 85086 (US); Mierswa, Sven, Mexico CP85506 (MX); Bohle, Harald, 06116 Halle (DE)
(74) Vertreter: Gulde Hengelhaupt Ziebig & Schneider

(57) **Zusammenfassung**

Die Erfindung betrifft eine Vorrichtung und ein Verfahren zur Reduktion von Bakterien und Viren im Wasser mittels eines kontrolliert wirkenden elektrischen Feldes.

Mit der Vorrichtung und dem unter definierten Bedingungen ablaufenden Verfahren gelingt es, auf physikalischem Wege - unter Einhaltung einer geeigneten Frequenz, Spannung und Stromstärke - zeitversetzt wirkende elektrisch negativ und positiv geladene Felder zu erzeugen, wodurch nachweisbar bakteriell kontaminiertes Wasser - insbesondere Trinkwasser gereinigt werden kann.
Erfindungsgemäß behandeltes Wasser bedarf keiner aufwändigen chemischen Behandlung zur Beseitigung schädlicher im Wasser oft enthaltener Krankheitserreger und es kann unbedenklich für den tierischen und menschlichen Genuß verwendet werden.

## Beschreibung

Die Erfindung betrifft eine Vorrichtung und ein Verfahren zur Reduktion von Bakterien und Viren im Wasser mittels eines kontrolliert wirkenden elektrischen Feldes.

Mit der Vorrichtung und dem unter definierten Bedingungen ablaufenden Verfahren gelingt es, auf physikalischem Wege - unter Einhaltung einer geeigneten Frequenz, Spannung und Stromstärke - zeitversetzt wirkende elektrisch negativ und positiv geladene Felder zu erzeugen, wodurch nachweisbar bakteriell kontaminiertes Wasser - insbesondere Trinkwasser - gereinigt werden kann.
Erfindungsgemäß behandeltes Wasser bedarf keiner aufwändigen chemischen Behandlung zur Beseitigung schädlicher im Wasser oft enthaltener Krankheitserreger und es kann unbedenklich für den tierischen und menschlichen Genuß verabreicht werden.

Es sei vorausgesetzt, dass eine sonst übliche mechanische Reinigung des derart behandelten Wassers, nämlich das Entfernen von Schwebstoffen oder anderen enthaltenen festen kristallinen Partikeln, bereits vorgenommen wurde.

Dem Stand der Technik zu Folge wurden bisher keine Apparaturen und Verfahren auf der Basis der Einleitung von elektrischem Strom in Flüssigkeiten, insbesondere Wasser, entwickelt, mit denen eine zufriedenstellende Dekontaminierung durch Bakterien und/oder Viren verunreinigten Wassers oder anderer Flüssigkeiten gelingt.
Es ist daher nach wie vor verbreitet üblich, bei der Trinkwasser- und oder Brauchwasseraufbereitung chemische Mittel, wie Chlor, Wasserstoffperoxid u.a. einzusetzen. Es ist bekannt, dass gerade diese Verfahrensweise den Trinkwassergenuß nicht unmittelbar zuläßt, sondern derart behandeltes Wasser gegebenenfalls nur im abgekochten Zustand ermöglicht.
Für Personen mit allergenen Reaktionen, bei krankheitsbedingt geschwächten Genesenden oder bei Kleinkindern kann z.B. chloriertes Wasser mindestens zur Übelkeit oder auch zu weiterführenden Verdauungsproblemen führen. Es ist daher in der Regel nur möglich, aus geprüften Mineralquellen entnommenes Wasser, das in entsprechenden Verpackungen im Handel angeboten wird, ohne gesundheitliche Bedenken haben zu müssen, zu geniessen. In Ländern und Regionen der Erde mit gravierender Trinkwasserknappheit wird Trinkwasser damit zu einem sich immer mehr verteuernden Gut.
Die Überdüngung des Bodens bei intensiv betriebener Landwirtschaft und das Eindringen dieser Stoffe in das Grundwasser trägt zusätzlich zur Verknappung von Trink- und/oder Brauchwasser bei.
Aus DE 2455205 ist ein Verfahren und eine Einrichtung zur elektrischen Reinigung und Entkeimung von Flüssigkeiten bekannt. Neben der Wasserversorgung beispielsweise bei der Feldwasserversorgung von Truppen, bei der Wasserversorgung von Geologen in entfernten Gebieten u.a. Anwendungsgebieten wird diese Erfindung auch für medizinisch-biologische Zwecke, z.B. zur Aufbereitung von pyrogenem Wasser eingesetzt. Sie ist gekennzeichnet, dadurch, dass der fließende Strom pulsierend ist, wobei die Stromimpulsdauer und die Spannung so gewählt sind, dass elektrische Entladungen zwischen den Elektroden entstehen.

Nach DE 100 14 289 A1 wird ein Verfahren zur medizinisch sachgerechten Desinfektion und zur Steuerung biologischer Prozesse in industriellen Produktionsverfahren und Produkten mittels elektrische Ströme und Felder vorgeschlagen. Hier wird ein Gleich-/oder Wechselstrom mit jeweils zweckdienlicher Spannung, Stromstärke und Frequenz kurzzeitig, intervallmäßig oder fortdauernd über Elektroden oder durch induktive oder kapazitive Kopplung in einen Stoff [ geleitet ], der mit Elektrolyten angereichert sein kann und der sich in einem leitfähigen Aggregatzustand befindet, abgegeben wird, zu dem Zweck den Stoff von allen oder einigen unerwünschten Sporen, Viren, Bakterien und anderen biologisch aktiven Mikroorganismen sowie schädlichen Parasiten und Kleinlebewesen sowie deren Zwischenwirte und/oder deren Entwicklungsformen derart zu befreien, indem diese abgetötet, nicht fortpflanzungsfähig oder entwicklungsunfähig oder kurzzeitig oder langfristig paralysiert werden.

Mit EP 0647 594 A2 ist ein elektrostatischer Wassersterilisierungsapparat bekannt. Er besteht aus einem geflanschten Zylindergehäuse sowie aus einer langgestreckten, im Zentrum des Gehäuses angeordneten Elektrode, wobei ein Generator für elektrostatische Niederspannung außerhalb des Gehäuses angeordnet ist, und wobei ein Wassereinlass und ein Wasserauslass neben einem Paar von Isolationsstücken an den beiden Enden des Gehäuses vorgesehen sind. Das gesamte Gehäuse ist an seiner gesamten Innenfläche mit einem hochleitfähigen, auf negativem elektrischen Potential liegenden Material ausgekleidet, so dass es als negative Elektrode wirken kann. Ein elektrostatisches Feld niedriger Spannung wird zwischen der Elektrode wirken kann. Ein elektrostatisches Feld niedriger Spannung wird zwischen der positiven und negativen Elektrode im Inneren des Gehäuses nach Einschalten des Generators aufgebaut.

Eine ähnliche Vorrichtung wird in US 3,766,05 genannt. Hier handelt es sich um ein Gerät zur Behandlung von Flüssigkeiten oder Lösungen mittels elektrischer Felder. Das Gerät besteht aus einem Gefäß, das die zu behandelnde Flüssigkeit enthält, wobei die Wände des Gefäßes dieelektrischen Materials sind und im Innern und aussen angeordnete Elektroden in paralleler Anordnung und Stärke, die variabel sein kann, elektrische Felder erzeugen, die zur Reinigung der Flüssigkeiten genutzt werden.

Aus den Gründen einer noch nicht ausreichend gelösten Reinigung auf elektrischem Wege und ohne die Verwendung chemischer Mittel, wie eingangs erwähnt, ist es dringend geboten, die Lebensgrundlage allen Lebens- nämlich die ausreichende Versorgung mit Trink- und/oder Brauchwasser- auch in Extremsituationen, z.B. bei der Versorgung aus Brunnenanlagen in regenarmen Gebieten, wo der Boden bakteriell belastet ist, zu gewährleisten.

Damit ist es Aufgabe der Erfindung, eine einfach aufgebaute Vorrichtung, die mit einer aus bekannten elektronischen Elementen bestehenden Schaltungsanordnung kombiniert wird zu entwickeln, wobei diese Schaltungsanordnung - unter Einhaltung gefundener Parameter - innerhalb eines Teils der erfindungsgemäßen Vorrichtung zeitversetzt wirkende negativ und positiv elektrisch geladene Felder in definierter Frequenz steuert und damit gezielt bisher in Trink- und/oder Brauchwasser vorkommende Bakterien und/oder Viren vernichtet.
Mit der Erfindung sollen chemische Stoffe, die sonst üblicherweise bei der Trink- und/oder Brauchwasseraufbereitung Verwendung finden, abgelöst werden, wodurch -neben den bekannten gesundheitlichen Aspekten - auch günstigere Effekte auf ökonomischem Gebiet erreicht werden sollen.

Erfindungsgemäß wird die Aufgabe wie folgt gelöst, wobei hinsichtlich der grundlegenden erfinderischen Gedanken auf die Patentansprüche 1 und 3 verwiesen wird.

Folgende ergänzende Hinweise zur erfinderischen Lehre sind erforderlich.

Ausgehend von einer anliegenden Wechselspannung von 110 V, 220 V oder 380 V wird in einer vorrichtungsgemäßen Anordnung über einen Transformator oder einem anderen geeigneten Umrichter eine Wechselspannung 1 und eine Wechselspannung 2 zur Verfügung gestellt. Beide Wechselspannungen erhalten eine Gleichrichtung, wobei die Wechselspannung 1 die Funktionsspannung zur Auslösung weiterer Effekte und die Wechselspannung 2 zur Aufrechterhaltung einer Betriebspannung der Platine mit ihren elektronischen Bauelementen dient.
Die Aufrechterhaltung ihrer definierten Spannungsparameter wird mittels geeigneter und dem Transformator nachgeschalteter Bausteine garantiert. Ein zentral in der v.g. Platine geschalteter Mikroprozessor erzeugt aufgrund der anliegenden Betriebspannung zwei zeitversetzte Steuersignale für zwei mit ihm in Wirkkontakt stehende Transistoren derart, dass diese in Zeitabständen weniger Mikrosekunden mit einer konstanten Frequenz von bis zu 2,5 KHz beaufschlagt werden. Ein Transistor 1 liefert daraufhin stets eine positive elektrische Ladung und ein Transistor 2 eine negative, wobei Spannungsspitzen - auf den Nulldurchgang bezogen- von ca. 66 V zu verzeichnen sind. Die Ausgänge der Transistoren 1 und 2 sind ferner über eine Wirkverbindung mit einer Katode der erfindungsgemäßen Vorrichtung und andererseits mit einer Kondensatorkombination der Schaltungsanordnung verbunden, sodass die Kondensatoranordnung, bei einer Spannung von ca. 90 V, ein in den Ladungen wechselndes elektrisches Feld zur Verfügung stellt, wobei sich ein Stromfluß von etwas über 1 A einregelt. Der Ausgang der Kondensatoranordnung steht mit der Anode der erfindungsgemäßen Vorrichtung in Verbindung, wobei sich diese, welche als metallischer Rundstab oder als ein Metallrohr vorliegt, mittig in der isolierten Katode - einem Metallrohr - befindet. Die Anode wird an ihren beiden Enden, welche über die Abschlüsse der Katode hinausgehen, durch geeignete Befestigungsmittel zentrisch in Position gehalten. Die Katode nimmt innerhalb der rohrförmigen Vorrichtung etwa ein Drittel des vorgegebenen Raumes ein. Die erfindungsgemäße Vorrichtung ist nach außen mit einer nichtmetallischenvorzugsweise- Kunststoffummantelung versehen.
Die Durchflußrichtung des mit Bakterien und/oder Viren kontaminierten Wassers ist von der katodenabgewandten Seite der Vorrichtung gegeben.

Die Erfindung soll nunmehr anhand eines zweckmässigen Ausführungsbeispiels näher erläutert werden.

Dabei zeigen die einzelnen Figuren:

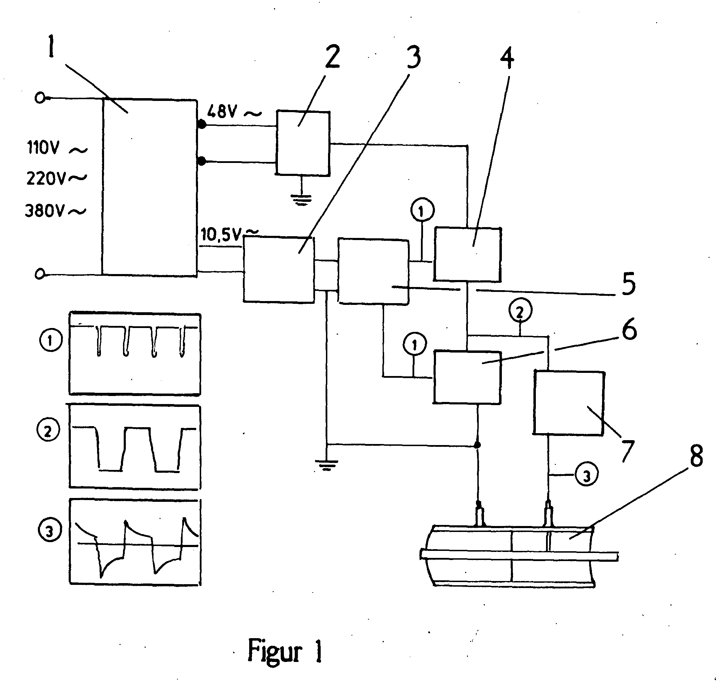

- Figur 1:: Blockbilddarstellung der elektronischen Schaltungsanordnung mit angeschlossener Ausbildung einer zweckmäßigen Vorrichtung

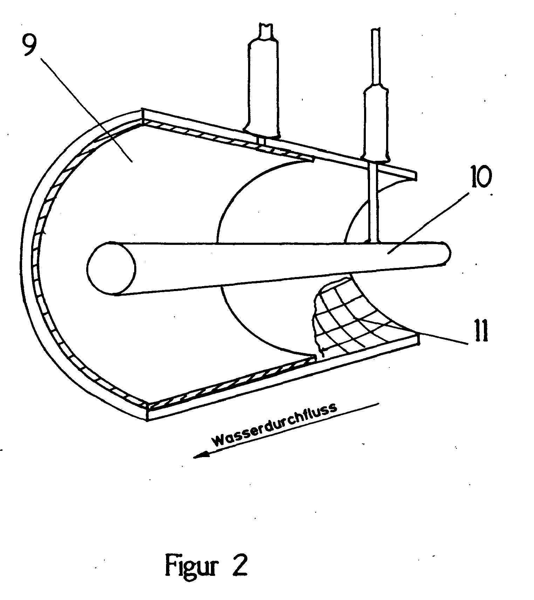

- Figur 2:: Perspektivische Darstellung der Vorrichtung im Schnitt

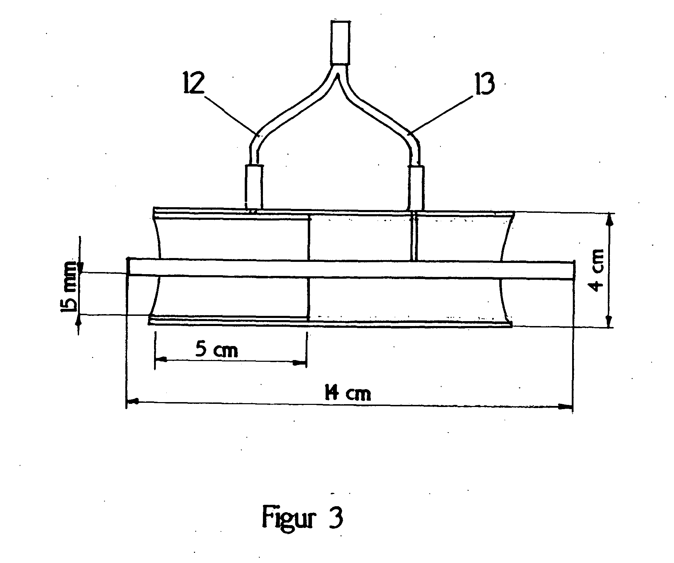

- Figur 3.: Seitenansicht der Vorrichtung im Schnitt mit zweckmäßigen Angaben zur konstruktiven Auslegung

Die verwendeten Bezugszeichen bedeuten:
1- Transformator
2- Kreuzbrücke
3- Spannungsregler
4- Transistor I
5- Mikroprozessor
6- Transistor II
7- Kondensatoranordnung
8- Vorrichtung
9- Katode
10- Anode
11- Isolation
12- Transistorverbindung
13- Kondensatorverbindung

An ein übliches Spannungsnetz, welches 110 V, 220 V oder 380 V vorhält, wird ein Transformator 1 gelegt, der eine Wechselspannung von 48 V und 10 V bereitstellt. Diese v.g. Werte werden in eine Gleichspannung gerichtet, wobei die gerichteten 48 V als Funktionsspannung und die 10 V - weiter in 5 V Gleichspannung gewandelt- als Betriebsspannung der Platine der Schaltungsanordnung genutzt wird.
Ein zentral in der Schaltungsanordnung integrierter Mikroprozessor 5 steuert 2 ihm nachgeordnete Transistoren I, II, nämlich 4 und 6, in einer Frequenz von 2000 bis 2500 Hz und zeitversetzt innerhalb von 20 Mikrosekunden derart an, dass diese in konstant wechselnder Folge jeweils eine positive und eine negative Ladung im durchfliessenden Wasser innerhalb der Vorrichtung 8, insbesondere im Abschnitt der rohrförmig eingebundenen Katode 9 in deren Mitte eine Anode 10 angeordnet ist, erzeugen. Ausgangs der Transistoren I,II, nämlich 4 und 6, sollen z.B. Spannungswerte von 66,25 V und ausgangs der Kondensatoranordnung Spannungswerte von 92,5 V vorliegen.
Der fließende elektrische Strom liegt bei zweckmäßigerweise 1,36 Ampere.
Die Vorrichtung 8 ist beispielhaft so bemessen, dass unter Beachtung der v.g. elektrischen Parameter die Breite der rohrförmigen Katode darin 5 cm, der Gesamtdurchmesser der Anode zzgl. ihrer Isolation 4 cm, die Gesamtlänge der Vorrichtung 8 hier 14 cm und der Aussenabstand der Anode 10 bis zur Katode 9 hier 1,5 cm beträgt.

Es ist denkbar, dass unter experimentell anders eingestellten Werten der Spannungs- und Stromversorgung die Vorrichtung 8 konstruktiv abgewandelt werden kann, das insbesondere dann, wenn kleinere oder größere Mengen gereinigten Wassers benötigt werden.

## Patentansprüche

1. Vorrichtung zur Reduktion von Bakterien und Viren im Wasser mittels eines kontrolliert wirkenden elektrischen Feldes, **gekennzeichnet dadurch, dass** die Vorrichtung (8) zylindrisch ausgebildet und von außen mit einer festen Isolation (11) umgeben ist und sich in ihrem Inneren, etwa in ihrem vorderen Drittel, eine metallische Katode (9) in Form eines Rohres befindet und diese mit Transistoren I und II (4,6) in direktem Wirkzusammenhang steht und weiterhin im Zentrum und parallel zu den Wandungen der festen Isolation (11) bzw. der metallischen Katode (9) eine durchgängige metallische Anode (10) vorzugsweise als Rundstab angeordnet ist, die über eine elektrische Verbindung mit einer Kondensatoranordnung (7) in Wirkverbindung steht, wobei die Anode (10) außerhalb oder am Ende der festen Isolation (11) abgestützt ist und eine außerhalb liegende Schaltungsanordnung in wechselnder Folge die erforderlichen elektrischen Felder mit positiver oder negativer Ladung sowie mit wechselnder Frequenz bereitstellt.

2. Vorrichtung zur Reduktion von Bakterien und Viren im Wasser nach Anspruch 1, **gekennzeichnet dadurch, dass** die Baugröße der Vorrichtung (8) im direkten Zusammenhang mit den verfahrensgemäßen Parametern einer anliegenden Spannung und Stromstärke steht.

3. Verfahren zur Reduktion von Bakterien und Viren im Wasser mittels eines kontrolliert wirkenden elektrischen Feldes, **gekennzeichnet dadurch, dass** definierte Spannungsparameter und ein Stromfluß gleichgerichtet verwendet werden und ein Mikroprozessor zeitversetzt Steuersignale für zwei mit ihm in Wirkkontakt stehende Transistoren I, II ( 4, 6 ) derart abgibt, dass diese zeitversetzt innerhalb weniger Mikrosekunden mit einer Frequenz von bis zu 2,5 KHz beaufschlagt werden, wobei der Transistor 1 (4) eine stets positive elektrische Ladung und der Transistor II (6) eine stets negative generiert, Spannungsspitzen - bezogen auf den Nulldurchgang- von ca. 66 V auftreten und die Ausgänge der Transistoren I, II ( 4, 6 ) ferner mit einer Kondensatoranordnung ( 7 ) in Verbindung stehen, sodass die Kondensatoranordnung ( 7 ), bei einer Spannung von ca. 90 V ein in den Ladungen wechselndes elektrisches Feld zur Verfügung stellt und dieses im Bereich der röhrenförmigen Katode (9) im gemeinsamen Wirken mit der Anode (10) aufgebaut wird , wobei sich eine Stromfluß von ca. 1 A einstellt.

4. Verfahren zur Reduktion von Bakterien und Viren im Wasser nach Anspruch 3, **gekennzeichnet dadurch , dass** die Transistoren I, II ( 4, 6 ) zeitversetzt innerhalb von ca. 20 Mikrosekunden durch den Mikroprozessor ( 5 ) angesteuert werden.

5. Verfahren zur Reduktion von Bakterien und Viren im Wasser nach Anspruch 3, **gekennzeichnet dadurch, dass** die Frequenz der angesteuerten Transistoren I, II ( 4, 6) seitens des Mikroprozessors ( 5 ) 2000 bis 2500 Hz beträgt.
